# FASCICULE DE BREVET EUROPEEN

(11) **EP 1 428 183 B1**
(45) Date de publication et mention de la délivrance du brevet: **25.04.2007**
(21) Numéro de dépôt: 02790214.7
(22) Date de dépôt: 24.07.2002
(51) Int. Cl.: G06Q 20/00, G07F 7/08

(54) **PROCEDE ET SYSTEME PERMETTANT DE VALIDER, EN METTANT EN OEUVRE UN OBJET PORTABLE D'UN UTILISATEUR, UNE REQUETE AUPRES D'UNE ENTITE**
VERFAHREN UND SYSTEM MIT EINER VOM BENUTZER TRAGBAREN EINRICHTUNG ZUM VALIDIEREN EINER ANFORDERUNG MIT EINER ENTITÄT
METHOD AND SYSTEM USING A USER PORTABLE DEVICE FOR VALIDATING A REQUEST WITH AN ENTITY

(30) Priorité: 25.07.2001 FR 0109904; 25.07.2001 FR 0109903
(43) Date de publication de la demande: 16.06.2004
(73) Titulaire: Crédit Lyonnais, 69002 Lyon (FR)
(72) Inventeur: BERGSTEN, Ulrik, F-94210 LA VARENNE (FR); ASSUERUS, Frédéric, F-78955 CARRIERES SOUS POISSY (FR)
(74) Mandataire: Grynwald, Albert
(86) Numéro de dépôt international: PCT/FR2002/002657
(87) Numéro de publication internationale: WO 2003/010720

(56) Documents cités:
- WO-A-00/17794
- WO-A-01/39085
- FR-A- 2 801 995
- US-A- 5 986 565
- US-A- 6 078 908

## Description

La présente invention concerne un procédé et un système permettant de valider, en mettant en oeuvre un objet portable d'un utilisateur, qu'une requête auprès d'une entité émane de l'utilisateur. La présente invention concerne également un procédé et un système destiné à permettre à un utilisateur d'effectuer un paiement à distance auprès d'un accepteur.

Le développement du commerce électronique grand public, c'est à dire la commercialisation de produits ou de services à partir d'un site commercial représenté typiquement par un serveur sur Internet reste freiné par l'absence de moyens ou de modes de paiement adaptés à de telles situations.

Les moyens de paiement disponibles de façon à peu près universelle souffrent de différents types de problèmes.
(a) Le chèque ne se prête pas à la dématérialisation et suppose l'envoi, ultérieur à la passation d'une commande, d'un courrier contenant le chèque.
(b) La carte bancaire n'est encore utilisable à grande échelle que dans le cadre d'un mode de vente à distance qui impose à l'utilisateur de communiquer au commerçant, à titre de paiement, le numéro de sa carte bancaire et des informations liées à sa carte bancaire, notamment la date d'expiration et éventuellement un cryptogramme visuel.
(c) Les banques et notamment les banques françaises ont cherché à développer un mode de paiement basé sur la carte bancaire et censé être adapté au commerce électronique grand public : c'est le télépaiement sécurisé sous différentes formes techniques. Le télépaiement sécurisé propose une solution qui se rapproche du paiement de proximité par carte bancaire. Il offre aux commerçants une garantie de paiement. En effet, ce mode de paiement est construit pour interdire la répudiation des paiements par les utilisateurs.

En mode de vente à distance, le commerçant bénéficie auprès de sa banque d'une garantie de paiement contre certains risques, notamment l'inexistence de la carte, la carte en opposition, déclarée perdue ou volée, l'utilisateur insolvable au moment du paiement. Il subsiste néanmoins le risque de répudiation dans le cas où le titulaire de la carte utilisée pour le paiement conteste le paiement, c'est à dire qu'il déclare formellement qu'il n'a pas effectué le paiement considéré. La solution utilisée couramment pour se prémunir contre la première catégorie de risques est la technique de la demande d'autorisation. L'objet du télépaiement sécurisé est de compléter la garantie accordée par la demande d'autorisation en éliminant le risque de répudiation. On utilise pour cela la puce présente dans les cartes bancaires. La puce va générer une « signature électronique » qui sera associée au paiement et qui montrera que la responsabilité du titulaire de la carte est bien engagée. L'art antérieur de la technique est représenté par les documents WO-A-01/39085 et WO-A-00/17794.

Le problème resté jusqu'à présent insurmontable vient du fait que la valeur d'usage du télépaiement sécurisé reste faible tant que l'on n'a pas réussi à généraliser simultanément le support du télépaiement tant du côté des utilisateurs que des commerçants. En effet, tant que l'on reste loin d'une telle généralisation, la motivation des utilisateurs comme celle des commerçants reste très limitée. Les contraintes liées à sa mise en oeuvre ne sont pas négligeables, notamment le coût et la difficulté d'utilisation. Pour un commerçant, l'acceptation du mode télépaiement sécurisé ne suffit pas car pour développer son activité, il doit être en mesure d'accepter des paiements de la grande majorité des internautes. De ce fait, il doit continuer à accepter des paiements en mode de vente à distance. Mais malheureusement, dans ces conditions il ne verra pratiquement pas le taux de ses impayés baisser car ces impayés seront motivés par la répudiation d'une partie des paiements. La totalité des fraudeurs choisiront en effet logiquement le mode de paiement le moins sécurisé. Du côté de l'utilisateur, accéder au télépaiement sécurisé nécessite un effort non négligeable, notamment l'acquisition coûteuse d'un lecteur de carte bancaire, une installation sur un poste de travail, un temps d'apprentissage, alors que ce mode de paiement ne lui apporte rien de tangible directement. Autrement dit, tant que la quasi-totalité des commerçants accepteront d'être payés en mode vente à distance l'utilisateur ne percevra pas l'intérêt d'un tel effort.

La présente invention ne prétend pas être un mode de paiement similaire ou équivalent aux différentes formes de télépaiement sécurisé. La présente invention cherche à apporter aux commerçants une solution meilleure que la vente à distance traditionnelle et qui soit plus rapidement applicable que le mode de télépaiement sécurisé.

On peut classer en trois catégories les motifs pour lesquels une transaction est répudiée :
- le paiement est effectué par un tiers qui a réussi à se procurer un numéro de carte (et la date d'expiration, voire même le cryptogramme visuel),
- le commerçant n'a pas donné entière satisfaction au client,
- le client est réellement de mauvaise foi en répudiant le paiement.

Le procédé et le système selon l'invention cherche à éliminer le premier motif de répudiation ou au moins à en réduire très fortement la probabilité. Par contre, déresponsabiliser les commerçants en les protégeant contre le deuxième motif d'impayé ne conduit qu'à une accentuation des problèmes. Enfin, et contrairement au télépaiement sécurisé, le procédé et le système selon l'invention n'apportent pas de garantie formelle contre le troisième motif de répudiation mais les clients hésiteront néanmoins à tricher car ils auront le sentiment qu'on risque de pouvoir les confondre.

La présente invention a pour objet de réduire de façon significative sinon d'éliminer le risque principal de répudiation d'une transaction, à savoir la répudiation du fait de la fraude d'un tiers qui a réussi à se procurer un numéro de carte et la date d'expiration correspondante, voire le cryptogramme visuel.

La présente invention a pour objet de permettre aux commerçants qui la mettent en oeuvre de réduire leur taux d'impayés et de ne plus avoir à utiliser le mode vente à distance classique en subissant les inconvénients ci-dessus explicités.

La présente invention a pour objet de procurer aux utilisateurs qui la mettent en oeuvre un niveau de confiance très élevé. En effet, les utilisateurs ont la double assurance que leur numéro de carte bancaire ne risque pas d'être détourné et qu'aucun fraudeur ne peut payer, en utilisant un numéro de carte qui n'est pas le sien, chez les commerçants mettant en oeuvre la présente invention.

### Le procédé selon l'invention

L'invention concerne d'une manière générale un procédé permettant de valider qu'une requête auprès d'une entité émane d'un utilisateur. L'invention concerne plus particulièrement, ainsi que cela sera ci-après exposé, un procédé destiné à permettre à un utilisateur, d'effectuer un paiement à distance auprès d'un accepteur.

Dans sa forme générale, l'invention met en oeuvre un objet portable mis à la disposition d'un utilisateur l'objet portable se présente notamment sous la forme d'une carte bancaire la requête porte notamment sur une transaction ou des informations confidentielles relatives à l'accès à un service ou à un lieu. On peut distinguer trois phases :
- une phase d'enregistrement au cours de laquelle l'utilisateur s'enregistre auprès d'un organisme, notamment un organisme bancaire,
- une phase d'émission d'une requête,
- une phase d'autorisation de réponse à la requête.

### Phase d'enregistrement

Lors de la phase d'enregistrement d'un utilisateur auprès d'un organisme, notamment un organisme bancaire le procédé met en oeuvre les étapes suivantes :

L'étape, pour l'utilisateur, d'accoupler l'objet portable à un terminal, notamment de type distributeur automatique de billets (DAB-GAB) ou de type terminal de paiement électronique (TPE). le terminal est connecté de manière directe ou indirecte à un serveur associé à une base de données de l'organisme.

Lors de la phase d'enregistrement, sur requête du terminal, l'utilisateur entre dans le terminal des données d'authentification de l'utilisateur, notamment un code confidentiel et/ou des données bio-métriques, associées à l'objet portable. Le terminal vérifie que les données d'authentification de l'utilisateur correspondent à l'objet portable.

Il résulte de la combinaison des traits techniques que la phase d'enregistrement permet d'authentifier l'objet portable et de vérifier que l'utilisateur est bien le titulaire de l'objet portable.

Lors de la phase d'enregistrement sur requête du terminal, l'utilisateur compose, au moyen d'un clavier du terminal, un identifiant personnel, notamment le numéro d'appel de son téléphone mobile. l'identifiant personnel est transmis par le terminal au serveur. Le terminal transmet un mot de passe à l'utilisateur, notamment en affichant le mot de passe sur un écran du terminal ou en délivrant à l'utilisateur un ticket sur lequel est imprimé le mot de passe. le mot de passe a été déterminé par le serveur et transmis au terminal. Il résulte de la combinaison des traits techniques que le mot de passe attribué par le serveur ne peut être transmis qu'à l'utilisateur titulaire de l'objet portable authentifié.

Lors de la phase d'enregistrement, le serveur mémorise et associe dans la base de données de l'organisme :
- l'identifiant personnel,
- le mot de passe.

### Phase d'émission d'une requête

Lors d'une phase d'émission d'une requête concernant notamment des informations confidentielles, l'utilisateur transmet à l'entité :
- la requête,
- l'identifiant personnel, notamment le numéro d'appel associé au téléphone mobile.

### Phase d'autorisation de réponse à la requête

Le procédé selon l'invention comprend en outre, lors d'une phase d'autorisation de réponse à la requête, les étapes qui seront ci-après décrites :

L'entité transmet à l'organisme l'identifiant personnel.

L'organisme adresse à l'utilisateur un message, notamment de type SMS. le message comprend une requête de saisie du mot de passe, se présentant notamment sous la forme d'un champ de saisie dans le message.

L'utilisateur transmet en retour le mot de passe à l'organisme, notamment en saisissant le mot de passe dans le champ de saisie.

L'organisme vérifie, dans la base de données, que le mot de passe, transmis par l'utilisateur, correspond à un mot de passe associé à l'identifiant personnel transmis par l'entité. Puis, l'organisme autorise l'entité à répondre à la requête de l'utilisateur.

De préférence, selon l'invention, le procédé est tel qu'il comprend en outre, lors de la phase d'enregistrement, l'étape, pour le terminal, de lire dans l'objet portable et de transmettre au serveur des données, notamment le numéro et la date d'expiration de l'objet portable ainsi que le nom et le prénom du titulaire de l'objet portable.

Il résulte de la combinaison des traits techniques décrits que la réponse à la requête est transmise par l'entité à l'utilisateur sans que l'entité ait eu connaissance du numéro et de la date d'expiration de l'objet portable de l'utilisateur.

De préférence, selon l'invention, le procédé est tel qu'il comprend en outre l'étape, pour le serveur, (i) de mémoriser et d'associer dans la base de données de l'organisme les données, notamment le numéro et la date d'expiration de l'objet portable, et (ii) d'associer les données avec l'identifiant personnel et le mot de passe.

De préférence, selon l'invention, le procédé est tel que l'identifiant personnel est une adresse de l'utilisateur à laquelle l'organisme peut transmettre la requête de saisie du mot de passe. l'adresse peut être notamment un numéro de téléphone mobile ou fixe ou une adresse de messagerie électronique. Il résulte de la combinaison des traits techniques que, selon toute vraisemblance, le message ne peut être reçu que par l'utilisateur.

De préférence, selon l'invention, le procédé comprend en outre l'étape, pour l'organisme, de vérifier que l'utilisateur peut être contacté à l'adresse définie par l'identifiant personnel, lors d'une requête relative à l'identifiant personnel.

### Cas du paiement de biens ou de services

L'invention concerne plus particulièrement un procédé destiné à permettre à un utilisateur, disposant d'un objet portable et d'un terminal mobile ayant une fonction de téléphonie, d'effectuer un paiement à distance auprès d'un accepteur. l'objet portable se présente notamment sous la forme d'une carte bancaire.

On peut distinguer deux phases :
- une phase d'enregistrement au cours de laquelle l'utilisateur s'enregistre auprès d'un organisme, notamment un organisme bancaire,
- une phase de paiement.

### Phase d'enregistrement

Lors de la phase d'enregistrement d'un utilisateur auprès d'un organisme, notamment un organisme bancaire le procédé met en oeuvre les étapes suivantes :

L'utilisateur d'accouple l'objet portable à un terminal, notamment de type distributeur automatique de billets (DAB-GAB) ou de type terminal de paiement électronique (TPE). le terminal est connecté de manière directe ou indirecte à un serveur associé à une base de données de l'organisme.

Sur requête du terminal, l'utilisateur entre dans le terminal des données d'authentification de l'utilisateur, notamment un code confidentiel et/ou des données bio-métriques, associées à l'objet portable.

Le terminal vérifie que les données d'authentification de l'utilisateur correspondent à l'objet portable.

Il résulte de la combinaison des traits techniques ci-dessus décrits que la phase d'enregistrement permet d'authentifier l'objet portable et de vérifier que l'utilisateur est bien le titulaire de l'objet portable.
le procédé comprend en outre, lors de la phase d'enregistrement, les étapes suivantes :

Le terminal lit dans l'objet portable et transmet au serveur des données d'identification, notamment le numéro et la date d'expiration de l'objet portable ainsi que le nom et le prénom du titulaire de l'objet portable.

Sur requête du terminal, l'utilisateur compose, au moyen d'un clavier du terminal, le numéro d'appel associé au terminal mobile.
le numéro d'appel associé au terminal mobile est transmis, par le terminal, au serveur.
le terminal transmet un mot de passe à l'utilisateur, notamment en affichant le mot de passe sur un écran du terminal ou en délivrant à l'utilisateur un ticket sur lequel est imprimé le mot de passe. le mot de passe a été déterminé par le serveur et transmis au terminal.

Il résulte de la combinaison des traits techniques que le mot de passe attribué par le serveur ne peut être transmis qu'à l'utilisateur titulaire de l'objet portable authentifié.

Lors de la phase d'enregistrement le serveur mémorise et associe, dans la base de données de l'organisme :
- les données d'identification,
- le numéro d'appel associé au terminal mobile,
- le mot de passe.

### Phase de paiement

Lors de la phase de paiement, le procédé selon l'invention met en oeuvre les étapes suivantes :

L'utilisateur transmet à l'accepteur le numéro d'appel associé au terminal mobile.

L'accepteur transmet à l'organisme le numéro d'appel associé au terminal mobile ainsi que des informations relatives au paiement, dont le montant du paiement,.

L'organisme adresse à l'utilisateur un message, notamment de type SMS, en utilisant le numéro d'appel associé au terminal mobile.
le message comprend :
- les informations relatives au paiement,
- une requête de saisie du mot de passe, se présentant notamment sous la forme d'un champ de saisie dans le message.

L'utilisateur transmet en retour le mot de passe à l'organisme, notamment en saisissant le mot de passe dans le champ de saisie.

L'organisme vérifie, dans la base de données, que le mot de passe transmis par l'utilisateur correspond au numéro d'appel associé au terminal mobile transmis par l'accepteur.

L'organisme :
- (i) recherche, dans la base de données, tout ou partie des données d'identification, notamment le numéro et la date d'expiration de l'objet portable, correspondant au numéro d'appel associé au terminal mobile et au mot de passe,
- (ii) fait débiter ou débite un compte bancaire associé à l'objet portable du montant du paiement et fait créditer ou crédite l'accepteur du montant,
- (iii) confirme auprès de l'accepteur le paiement à distance de l'utilisateur.

De préférence, l'organisme vérifie la validité de l'objet portable avant de confirmer à l'accepteur le paiement à distance de l'utilisateur.

Il résulte de la combinaison des traits techniques que le paiement est acquitté à distance par l'utilisateur sans qu'il ait eu à communiquer à l'accepteur les données d'identification de l'objet portable, notamment le numéro et de la date d'expiration de la carte bancaire de l'utilisateur.

### Le système selon l'invention

L'invention concerne également d'une manière générale un système permettant de valider qu'une requête auprès d'une entité émane d'un utilisateur. L'invention concerne plus particulièrement, ainsi que cela sera ci-après exposé, un système destiné à permettre à un utilisateur, d'effectuer un paiement à distance auprès d'un accepteur.

Dans sa forme générale, l'invention met en oeuvre un objet portable mis à la disposition d'un utilisateur. l'objet portable se présente notamment sous la forme d'une carte bancaire. la requête porte notamment sur une transaction ou sur des informations confidentielles relatives à l'accès à un service ou à un lieu.

On peut distinguer trois phases impliquant la mise en oeuvre de moyens techniques spécifiques :
- une phase d'enregistrement au cours de laquelle l'utilisateur s'enregistre auprès d'un organisme, notamment un organisme bancaire,
- une phase d'émission d'une requête,
- une phase d'autorisation de réponse à la requête.

### Phase d'enregistrement de l'utilisateur auprès d'un organisme, notamment un organisme bancaire

Le système comprend, pour permettre l'enregistrement de l'utilisateur, un terminal, notamment un terminal de type distributeur automatique de billets (DAB-GAB) ou de type terminal de paiement électronique (TPE). Le terminal comporte des moyens d'accouplement permettant à l'utilisateur d'accoupler l'objet portable au terminal.

Le système comprend en outre un serveur associé à une base de données d'un organisme, notamment un organisme bancaire.
le serveur comprend des moyens de connexion pour connecter, de manière directe ou indirecte, le terminal au serveur via un réseau de communication, notamment informatique. le terminal comprend une interface utilisateur-terminal permettant à l'utilisateur d'entrer dans le terminal, sur requête du terminal, des données d'authentification de l'utilisateur, notamment un code confidentiel et/ou des données bio-métriques, associées à l'objet portable. Le terminal comprend en outre des moyens de vérification terminal pour vérifier que les données d'authentification de l'utilisateur correspondent à l'objet portable.

Il résulte de la combinaison des moyens techniques décrits que la phase d'enregistrement permet d'authentifier l'objet portable et de vérifier que l'utilisateur est bien le titulaire de l'objet portable.

L'interface utilisateur-terminal comporte un clavier permettant à l'utilisateur de composer, sur requête du terminal, un identifiant personnel, notamment le numéro d'appel d'un téléphone mobile de l'utilisateur.
le terminal comporte en outre :
- des moyens de transmission terminal pour transmettre l'identifiant personnel au serveur,
- des moyens de communication terminal pour communiquer un mot de passe à l'utilisateur, notamment en affichant le mot de passe sur un écran du terminal ou en délivrant à l'utilisateur un ticket sur lequel est imprimé le mot de passe.
le mot de passe a été déterminé par le serveur en mettant en oeuvre des moyens de traitement informatique serveur. le mot de passe a été transmis par le serveur au terminal, via le réseau de communication.
Il résulte de la combinaison des moyens techniques décrits que le mot de passe attribué par le serveur ne peut être transmis qu'à l'utilisateur titulaire de l'objet portable authentifié. les moyens de traitement informatique serveur comportent des moyens d'enregistrement pour mémoriser et associer dans la base de données :
- l'identifiant personnel,
- le mot de passe.

### Phase d'émission d'une requête par un utilisateur

Le système comprend en outre des moyens d'établissement de requête et de transmission de requête permettant à l'utilisateur d'émettre une requête, concernant notamment des informations confidentielles, et de transmettre à l'entité la requête ainsi que l'identifiant personnel, notamment le numéro d'appel associé au téléphone mobile.

### Phase d'autorisation de réponse à la requête

Les moyens techniques ci-après décrits sont mis en oeuvre lors de la phase d'autorisation de réponse à la requête.

Le serveur de l'organisme comprend en outre :
- des moyens de réception serveur pour recevoir de l'entité l'identifiant personnel,
- des moyens de transmission serveur pour adresser à l'utilisateur un message, notamment de type SMS.
le message comprend une requête de saisie du mot de passe se présentant notamment sous la forme d'un champ de saisie dans le message.

L'utilisateur dispose de moyens de transmission de mot de passe, notamment d'un téléphone mobile, permettant, à l'utilisateur, de transmettre en retour le mot de passe au serveur de l'organisme, après que le mot de passe ait été saisi par l'utilisateur dans le champ de saisie. les moyens de traitement informatique serveur comporte des moyens de vérification serveur pour vérifier dans la base de données que le mot de passe, transmis par l'utilisateur, correspond à un mot de passe associé à l'identifiant personnel transmis par l'entité. le serveur produit, en cas de vérification aboutie, un message d'autorisation destiné à être transmis à l'entité, l'autorisant à répondre à la requête de l'utilisateur.

De préférence, selon l'invention le système est tel que le terminal comprend :
- des moyens de lecture terminal permettant de lire dans l'objet portable des données, notamment le numéro et la date d'expiration de l'objet portable ainsi que le nom et le prénom du titulaire de l'objet portable,
- des moyens de transmission terminal permettant de transmettre les données au serveur.
les moyens de lecture terminal et les moyens de transmission terminal sont mis en oeuvre lors de la phase d'enregistrement de l'utilisateur.

De préférence, selon l'invention, le système est tel que les moyens d'enregistrement du serveur permettent de mémoriser dans la base de données et d'associer avec l'identifiant personnel et le mot de passe, les données, notamment le numéro et la date d'expiration de l'objet portable.

De préférence, selon l'invention, le système est tel que l'identifiant personnel est une adresse de l'utilisateur à laquelle l'organisme peut transmettre la requête de saisie du mot de passe. l'adresse peut être notamment un numéro de téléphone mobile ou fixe ou une adresse de messagerie électronique. Il résulte de la combinaison des moyens techniques décrits que, selon toute vraisemblance, le message ne peut être reçu que par l'utilisateur.

De préférence, selon l'invention, le système est tel que les moyens de traitement informatique et les moyens de transmission serveur permettent de vérifier que l'utilisateur peut être contacté à l'adresse définie par l'identifiant personnel.

### Cas du paiement de biens ou de services

L'invention concerne plus particulièrement un système permettant à un utilisateur, disposant d'un objet portable et d'un terminal mobile ayant une fonction de téléphonie, d'effectuer un paiement à distance auprès d'un accepteur. l'objet portable se présente notamment sous la forme d'une carte bancaire.

On peut distinguer deux phases impliquant la mise en oeuvre de moyens techniques spécifiques :
- une phase d'enregistrement au cours de laquelle l'utilisateur s'enregistre auprès d'un organisme, notamment un organisme bancaire,
- une phase de paiement.

### Phase d'enregistrement de l'utilisateur auprès d'un organisme, notamment auprès d'un organisme bancaire

Le système comprend, pour permettre l'enregistrement de l'utilisateur, un terminal, notamment un terminal de type distributeur automatique de billets (DAB-GAB) ou de type terminal de paiement électronique (TPE). Le terminal comporte des moyens d'accouplement permettant à l'utilisateur, d'accoupler l'objet portable au terminal.

Le système comprend en outre un serveur associé à une base de données d'un organisme, notamment d'un organisme bancaire.
le serveur comprend des moyens de connexion pour connecter, de manière directe ou indirecte, le terminal au serveur via un réseau de communication, notamment informatique.
le terminal comprend en outre :
- une interface utilisateur-terminal permettant à l'utilisateur d'entrer dans le terminal, sur requête du terminal, des données d'authentification de l'utilisateur, notamment un code confidentiel et/ou des données bio-métriques, associées à l'objet portable,
- des moyens de vérification terminal pour vérifier que les données d'authentification de l'utilisateur correspondent à l'objet portable.

Il résulte de la combinaison des traits techniques que la phase d'enregistrement permet d'authentifier l'objet portable et de vérifier que l'utilisateur est bien le titulaire de l'objet portable.
le terminal comprend en outre :
- des moyens de lecture terminal permettant de lire dans l'objet portable des données d'identification, notamment le numéro et la date d'expiration de l'objet portable ainsi que le nom et le prénom du titulaire de l'objet portable,
- des moyens de transmission terminal permettant de transmettre les données au serveur.

Les moyens de lecture terminal et les moyens de transmission terminal sont mis en oeuvre lors de la phase d'enregistrement de l'utilisateur.

L'interface utilisateur-terminal comporte un clavier permettant à l'utilisateur de composer, sur requête du terminal, le numéro d'appel associé au terminal mobile.

le terminal comporte :
- des moyens de transmission terminal pour transmettre au serveur le numéro d'appel associé au terminal mobile,
- des moyens de communication terminal pour communiquer un mot de passe à l'utilisateur, notamment en affichant le mot de passe sur un écran du terminal ou en délivrant à l'utilisateur un ticket sur lequel est imprimé le mot de passe.
le mot de passe a été déterminé par le serveur en mettant en oeuvre des moyens de traitement informatique, le mot de passe a été transmis par le serveur au terminal, via le réseau de communication. Il résulte de la combinaison des traits techniques que le mot de passe attribué par le serveur ne peut être transmis qu'à l'utilisateur titulaire de l'objet portable authentifié. les moyens de traitement informatique serveur comportent des moyens d'enregistrement pour mémoriser et associer dans la base de données :
- les données d'identification,
- le numéro d'appel associé au terminal mobile,
- le mot de passe.

### Phase de paiement

Pour permettre d'effectuer un paiement à distance auprès d'un accepteur, le système comprend des moyens de transmission accepteur permettant à l'utilisateur de transmettre à l'accepteur le numéro d'appel associé au terminal mobile.
le serveur de l'organisme comprend en outre :
- des moyens de réception serveur pour recevoir de l'accepteur le numéro d'appel associé au terminal mobile ainsi que des informations relatives au paiement, dont le montant du paiement,
- des moyens de transmission serveur pour adresser à l'utilisateur un message, notamment de type SMS, en utilisant le numéro d'appel associé au terminal mobile.

Le message comprend les informations relatives au paiement et une requête de saisie du mot de passe, se présentant notamment sous la forme d'un champ de saisie dans le message.

Le terminal mobile comprend des moyens de transmission terminal mobile permettant, à l'utilisateur, de transmettre en retour le mot de passe au serveur de l'organisme, après que le mot de passe ait été saisi par l'utilisateur dans le champ de saisie.

Les moyens de traitement informatique serveur comportent :
- des moyens de vérification pour vérifier dans la base de données que le mot de passe, transmis par l'utilisateur, correspond au numéro d'appel associé au terminal mobile transmis par l'accepteur,
- des moyens de recherche pour rechercher, dans la base de données, tout ou partie des données d'identification, notamment le numéro et la date d'expiration de l'objet portable, correspondant au numéro d'appel associé au terminal mobile et au mot de passe,
- des moyens de commande pour débiter ou pour faire débiter un compte bancaire associé à l'objet portable du montant du paiement et pour créditer ou pour faire créditer l'accepteur du montant.
- des moyens de transmission serveur pour confirmer à l'accepteur le paiement à distance de l'utilisateur.

De préférence, l'organisme vérifie la validité de l'objet portable avant de confirmer à l'accepteur le paiement à distance de l'utilisateur.

Il résulte de la combinaison des traits techniques que le paiement est acquitté à distance par l'utilisateur sans qu'il ait eu à communiquer à l'accepteur les données d'identification de l'objet portable, notamment le numéro et de la date d'expiration de la carte bancaire de l'utilisateur.

Grâce au procédé et au système selon l'invention, un commerçant accepteur à la possibilité de demander à un client utilisateur de s'inscrire au système de paiement en toute confiance selon l'invention, quel que soit l'émetteur de la carte. En effet, les clients utilisateurs peuvent utiliser des DAB-GAB qui sont disponibles sur tout un territoire. Cette inscription ne constitue donc pas une contrainte très forte pour les clients utilisateurs. Ils peuvent l'accepter.

Dans ses conditions, le titulaire de la carte n'a plus de motif légitime de répudiation.

Par ailleurs, l'enregistrement est basé sur une authentification forte du client utilisateur et le paiement est fortement authentifié par le mot de passe connu du seul titulaire de la carte. Il est clair qu'un fraudeur aurait de grande difficultés à effectuer des paiements avec la carte à l'insu du titulaire de la carte.

D'autres caractéristiques et avantages de l'invention apparaîtront à la lecture de la description de variantes de réalisation de l'invention données à titre d'exemple indicatif et non limitatif, et de la
- figure 1 qui représente un système permettant de valider qu'une requête auprès d'une entité émane d'un utilisateur habilité,
- figure 2 qui représente un système permettant à un utilisateur habilité d'effectuer un paiement à distance auprès d'un accepteur.

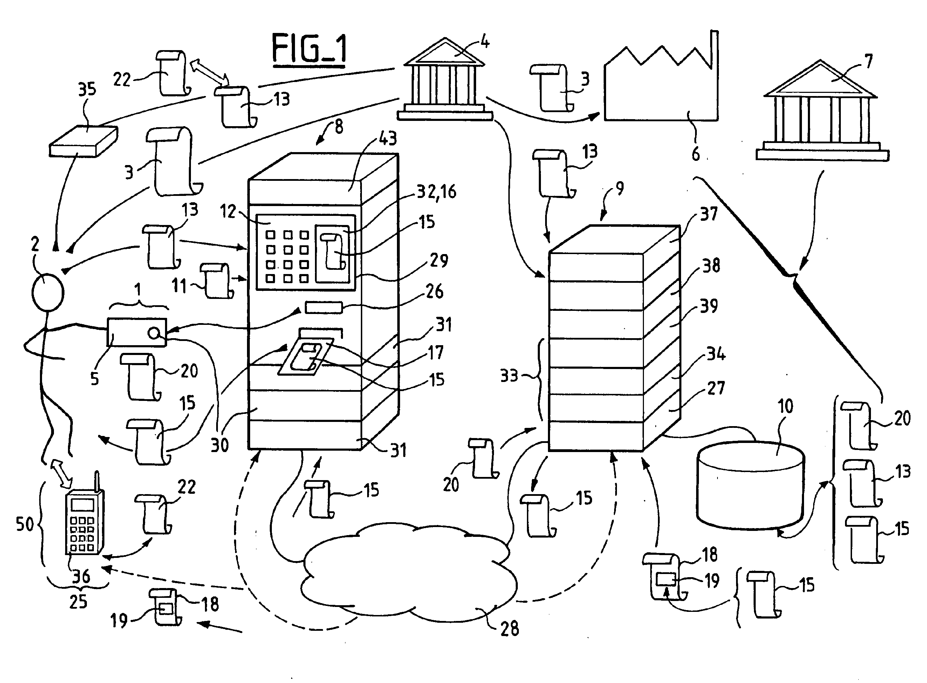

On va maintenant décrire la figure 1 qui représente un système permettant de valider, en mettant en oeuvre un objet portable 1 d'un utilisateur 2, qu'une requête 3 auprès d'une entité 4 émane de cet utilisateur 2. l'objet portable 1 se présente notamment sous la forme d'une carte bancaire 5.

Dans le cas de la variante de réalisation décrite en se référant à la figure 1, la requête 3 porte sur des informations confidentielles relatives à l'accès à un service ou à un lieu 6.

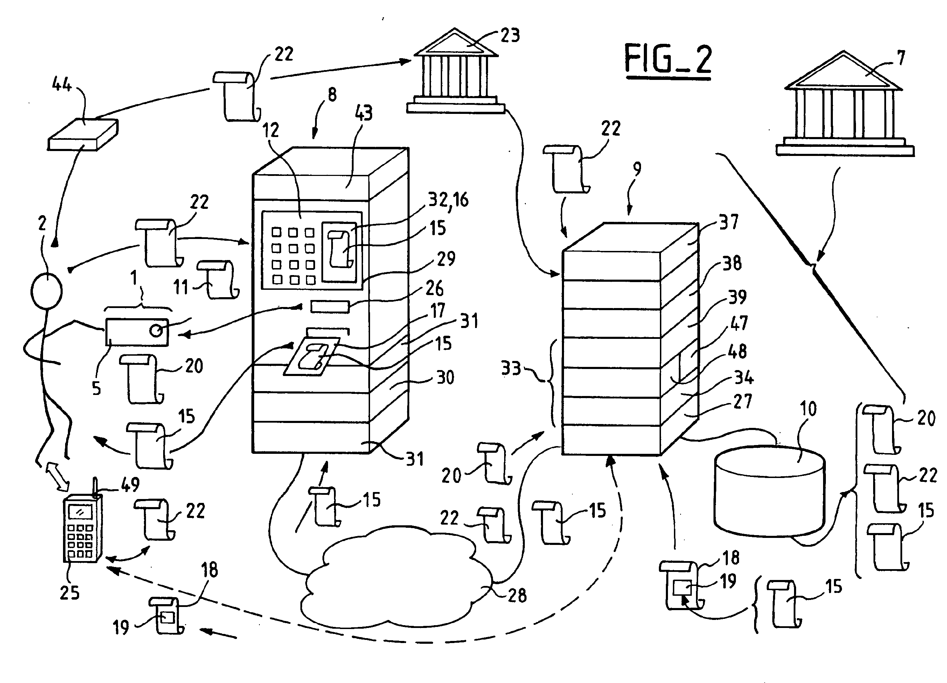

Dans le cas de la variante de réalisation qui sera décrite ci-après en se référant à la figure 2, la requête 3 porte sur une transaction.

On peut distinguer trois phases impliquant la mise en oeuvre de moyens techniques spécifiques :
- une phase d'enregistrement au cours de laquelle l'utilisateur 2 s'enregistre auprès d'un organisme 7, notamment un organisme bancaire,
- une phase d'émission d'une requête 3,
- une phase d'autorisation de réponse à la requête 3.

Les éléments techniques mis en oeuvre dans le cas de chacune des ces trois phases sont ci-après décrits.

### Phase d'enregistrement de l'utilisateur 2 auprès d'un organisme 7

Le système comprend, pour permettre l'enregistrement de l'utilisateur 2, un terminal 8, notamment un terminal de type distributeur automatique de billets (DAB-GAB) ou de type terminal de paiement électronique (TPE). Le terminal 8 comporte des moyens d'accouplement 26 permettant à l'utilisateur 2 d'accoupler l'objet portable 1 au terminal 8. Le système comprend en outre un serveur 9 associé à une base de données 10 gérée par l'organisme bancaire 7. le serveur 9 comprend des moyens de connexion 27 qui permettent de connecter, de manière directe ou indirecte, le terminal 8 au serveur 9 via un réseau de communication 28, notamment informatique. le terminal 8 comprend une interface utilisateur-terminal 29 permettant à l'utilisateur 2 d'entrer dans le terminal 8, sur requête du terminal 8, des données d'authentification 11 de l'utilisateur, notamment un code confidentiel et/ou des données bio-métriques, associées à l'objet portable 1. Le terminal 8 comprend en outre des moyens de vérification terminal 30 pour vérifier que les données d'authentification 11 de l'utilisateur 2 correspondent à l'objet portable 1.

Les moyens techniques ci-dessus décrits permettent donc d'authentifier l'objet portable 1 et de vérifier que l'utilisateur 2 qui s'enregistre est bien titulaire de l'objet portable 1.

L'interface utilisateur-terminal 29 comporte un clavier 12 permettant à l'utilisateur 2 de composer, sur requête du terminal 8, un identifiant personnel 13. Dans le cas de la variante de réalisation représentée sur la figure 1, l'identifiant personnel 13 est le numéro d'appel associé au téléphone mobile 36 de l'utilisateur.
le terminal 8 comporte en outre :
- des moyens de transmission terminal 31 pour transmettre l'identifiant personnel 13 au serveur 9,
- des moyens de communication terminal 32 pour communiquer un mot de passe 15 à l'utilisateur, notamment en affichant le mot de passe 15 sur un écran 16 du terminal 8 ou en délivrant à l'utilisateur 2 un ticket 17 sur lequel est imprimé le mot de passe 15.
le mot de passe 15 a été déterminé par le serveur 9 en mettant en oeuvre des moyens de traitement informatique serveur 33. le mot de passe 15 a été transmis par le serveur 9 au terminal 8, via le réseau de communication 28.
Il résulte de la combinaison des moyens techniques ci-dessus décrits que le mot de passe 15 attribué par le serveur 9 ne peut être transmis qu'à l'utilisateur 2 titulaire de l'objet portable 1 préalablement authentifié.

Dans le cas où l'objet portable est une carte bancaire, on utilise un mécanisme d'authentification de la carte et de son titulaire qui existe en standard. On peut aller plus loin en effectuant une demande d'autorisation de paiement, ce qui permet de mettre en oeuvre une mécanisme d'authentification supplémentaire impliquant alors la banque émettrice de la carte bancaire.
les moyens de traitement informatique serveur 33 comportent des moyens d'enregistrement 34 pour mémoriser et associer dans la base de données 10 :
- l'identifiant personnel 13,
- le mot de passe 15.

Dans le cas de la variante de réalisation représentée sur la figure 1 le terminal 8 comprend en outre des moyens de lecture terminal 43 permettant de lire dans l'objet portable 1 des données 20, notamment le numéro et la date d'expiration de l'objet portable 1 ainsi que le nom et le prénom du titulaire de l'objet portable 1. Les moyens de transmission terminal 31 permettent de transmettre les données 20 ainsi lues au serveur 9. les moyens de lecture terminal 43 et les moyens de transmission terminal 31 sont mis en oeuvre lors de la phase d'enregistrement de l'utilisateur. Les moyens d'enregistrement 34 du serveur 9 permettent de mémoriser dans la base de données 10 et d'associer avec l'identifiant personnel 13 et le mot de passe 15, les données 20, notamment le numéro et la date d'expiration de l'objet portable 1.

Le système comprend en outre des moyens 35 d'établissement de requête 3 et de transmission de requête 3. Ces moyens 35 permettent à l'utilisateur 2 d'émettre une requête 3, concernant notamment des informations confidentielles d'accès à un lieu 6, et de transmettre à l'entité 4 la requête 3 ainsi que l'identifiant personnel 13 de l'utilisateur 2. Dans le cas de la variante de réalisation représentée sur la figure 1, l'identifiant personnel 13 est le numéro d'appel 22 associé au téléphone mobile 36.

### Phase d'autorisation de réponse à la requête 3

Les moyens techniques ci-après décrits sont mis en oeuvre lors de la phase d'autorisation de réponse à la requête 3.

Le serveur 9 de l'organisme 7 comprend en outre :
- des moyens de réception serveur 37 pour recevoir de l'entité 4 l'identifiant personnel 13,
- des moyens de transmission serveur 38 pour adresser à l'utilisateur 2, via le téléphone mobile 36 de l'utilisateur, un message 18 de type SMS.
le message 18 comprend une requête de saisie du mot de passe 15 se présentant notamment sous la forme d'un champ de saisie 19 dans le message 18.

Le téléphone mobile 36 de l'utilisateur 2 comporte des moyens de transmission de mot de passe 50 permettant, à l'utilisateur, de transmettre en retour le mot de passe 15 au serveur 9 de l'organisme 7. A cet effet, le mot de passe 15 est saisi par l'utilisateur 2 dans le champ de saisie 19.

Les moyens de traitement informatique serveur 33 comportent des moyens de vérification serveur 39 pour vérifier dans la base de données 10 que le mot de passe 15, transmis par l'utilisateur, correspond à un mot de passe 15 associé à l'identifiant personnel 13 transmis par l'entité 4. le serveur 9 produit, en cas de vérification aboutie, un message d'autorisation 40 destiné à être transmis à l'entité 4, l'autorisant à répondre à la requête 3 de l'utilisateur.

Dans le cas de la variante de réalisation représentée sur la figure 1, ainsi que cela a été déjà précisé, l'adresse de l'utilisateur 2 à laquelle l'organisme 7 peut transmettre la requête de saisie du mot de passe 15 est le numéro d'appel 22 associé au téléphone mobile de l'utilisateur 2. Ce numéro d'appel 22 de téléphone mobile constitue l'identifiant personnel 13. L'adresse constituant l'identifiant personnel 13 pourrait être d'une autre nature sans sortir du champ de l'invention. L'adresse pourrait par exemple être celle d'un téléphone fixe ou l'adresse d'une messagerie électronique. Il résulte de la combinaison des moyens techniques décrits que, selon toute vraisemblance, le message 18 ne peut être reçu que par l'utilisateur.

Dans le cas de la variante de réalisation représentée sur la figure 1, les moyens de traitement informatique serveur 33 et les moyens de transmission serveur 38 permettent de vérifier que l'utilisateur 2 peut être contacté à l'adresse définie par l'identifiant personnel 13.

On va maintenant décrire en se référant à la figure 2 une autre variante de réalisation du système selon l'invention. Dans le cas de la variante représentée sur la figure 2, le système permet à un utilisateur 2 d'effectuer un paiement à distance auprès d'un accepteur 23. A cet effet, l'utilisateur 2 dispose d'un objet portable 1 et d'un terminal mobile 25 ayant une fonction de téléphonie. l'objet portable 1 se présente notamment sous la forme d'une carte bancaire 5.

On retrouve, dans le cas de la variante de réalisation représentée sur la figure 2 la plupart des mêmes organes que ceux décrits en se référant à la figure 1. Ils portent les mêmes références numériques.

On peut distinguer, comme dans le cas de la variante de réalisation représentée sur la figure 1, deux phases impliquant la mise en oeuvre de moyens techniques spécifiques :
- une phase d'enregistrement au cours de laquelle l'utilisateur 2 s'enregistre auprès d'un organisme 7, notamment un organisme bancaire,
- une phase de paiement.

### Phase d'enregistrement de l'utilisateur 2 auprès d'un organisme 7, notamment auprès d'un organisme bancaire

Le système comprend, pour permettre l'enregistrement de l'utilisateur, un terminal 8, notamment un terminal de type distributeur automatique de billets (DAB-GAB) ou de type terminal de paiement électronique (TPE). Le terminal 8 comporte des moyens d'accouplement 26 permettant à l'utilisateur, d'accoupler l'objet portable 1 au terminal 8.

Le système comprend en outre un serveur 9 associé à une base de données 10 d'un organisme 7, notamment d'un organisme 7 bancaire.
le serveur 9 comprend des moyens de connexion 27 pour connecter, de manière directe ou indirecte, le terminal 8 au serveur 9 via un réseau de communication 28, notamment informatique.
le terminal 8 comprend en outre :
- une interface utilisateur-terminal 29 permettant à l'utilisateur 2 d'entrer dans le terminal 8, sur requête du terminal 8, des données d'authentification 11 de l'utilisateur, notamment un code confidentiel et/ou des données bio-métriques, associées à l'objet portable 1 ,
- des moyens de vérification terminal 30 pour vérifier que les données d'authentification 11 de l'utilisateur 2 correspondent à l'objet portable 1.

Il résulte de la combinaison des traits techniques que la phase d'enregistrement permet d'authentifier l'objet portable 1 et de vérifier que l'utilisateur 2 est bien le titulaire de l'objet portable 1.
le terminal 8 comprend en outre :
- des moyens de lecture terminal 43 permettant de lire dans l'objet portable 1 des données d'identification 20, notamment le numéro et la date d'expiration de l'objet portable 1 ainsi que le nom et le prénom du titulaire de l'objet portable 1,
- des moyens de transmission terminal 31 permettant de transmettre les données d'identification 20 au serveur 9.

Les moyens de lecture terminal 43 et les moyens de transmission terminal 31 sont mis en oeuvre lors de la phase d'enregistrement de l'utilisateur.

L'interface utilisateur-terminal 29 comporte un clavier 12 permettant à l'utilisateur 2 de composer, sur requête du terminal 8, le numéro d'appel associé au terminal mobile 25. dans le cas de la variante représentée sur la figure 2 le terminal mobile 25 est un téléphone mobile.
le terminal 8 comporte :
- des moyens de transmission terminal 31 pour transmettre au serveur 9 le numéro d'appel associé au terminal mobile 25,
- des moyens de communication terminal 32 pour communiquer un mot de passe 15 à l'utilisateur, notamment en affichant le mot de passe 15 sur un écran 16 du terminal 8 ou en délivrant à l'utilisateur 2 un ticket 17 sur lequel est imprimé le mot de passe 15.
le mot de passe 15 a été déterminé par le serveur 9 en mettant en oeuvre des moyens de traitement informatique. le mot de passe 15 a été transmis par le serveur 9 au terminal 8, via le réseau de communication 28. Il résulte de la combinaison des traits techniques que le mot de passe 15 attribué par le serveur 9 ne peut être transmis qu'à l'utilisateur 2 titulaire de l'objet portable 1 authentifié. les moyens de traitement informatique serveur 33 comportent des moyens d'enregistrement 34 pour mémoriser et associer dans la base de données 10 :
- les données d'identification 20,
- le numéro d'appel associé au terminal mobile 25,
- le mot de passe 15.

### Phase de paiement

Pour permettre d'effectuer un paiement à distance auprès d'un accepteur 23, le système comprend des moyens de transmission accepteur 44 permettant à l'utilisateur 2 de transmettre à l'accepteur 23 le numéro d'appel 22 associé au terminal mobile 25.

Les moyens de transmission accepteur 44 peuvent être réalisés sous la forme d'un téléphone permettant à l'utilisateur 2 de transmettre vers un centre d'appel ou un serveur vocal le numéro d'appel 22 associé au terminal mobile 25. Ces données peuvent être également transmises sous forme d'un message électronique au moyen d'un équipement informatique relié à un réseau de communication, notamment de type Internet. Les moyens de transmission accepteur 44 peuvent être des équipements différents du terminal mobile 25.
le serveur 9 de l'organisme 7 comprend en outre :
- des moyens de réception serveur 37 pour recevoir de l'accepteur 23 le numéro d'appel 22 associé au terminal mobile 25 ainsi que des informations relatives au paiement, dont le montant du paiement,
- des moyens de transmission serveur 38 pour adresser à l'utilisateur 2 un message 18, notamment de type SMS, en utilisant le numéro d'appel 22 associé au terminal mobile 25.

Le message 18 comprend les informations relatives au paiement et une requête de saisie du mot de passe 15, se présentant notamment sous la forme d'un champ de saisie 19 dans le message 18.

Le terminal mobile 25 comprend des moyens de transmission terminal mobile 49 permettant, à l'utilisateur, de transmettre en retour le mot de passe 15 au serveur 9 de l'organisme 7, après que le mot de passe 15 ait été saisi par l'utilisateur 2 dans le champ de saisie 19.

Les moyens de traitement informatique serveur 33 comportent :
- des moyens de vérification serveur 39 pour vérifier dans la base de données 10 que le mot de passe 15, transmis par l'utilisateur, correspond au numéro d'appel associé au terminal mobile 25 transmis par l'accepteur 23,
- des moyens de recherche 47 pour rechercher, dans la base de données 10, tout ou partie des données d'identification 20, notamment le numéro et la date d'expiration de l'objet portable 1 , correspondant au numéro d'appel associé au terminal mobile 25 et au mot de passe 15,
- des moyens de commande 48 pour débiter ou pour faire débiter un compte bancaire associé à l'objet portable 1 du montant du paiement et pour créditer ou pour faire créditer l'accepteur 23 du montant.
- des moyens de transmission serveur 38 pour confirmer à l'accepteur 23 le paiement à distance de l'utilisateur.

L'organisme 7 vérifie la validité de l'objet portable 1 avant de confirmer à l'accepteur 23 le paiement à distance de l'utilisateur.

Il résulte de la combinaison des traits techniques que le paiement est acquitté à distance par l'utilisateur 2 sans qu'il ait eu à communiquer à l'accepteur 23 les données d'identification 20 de l'objet portable 1, notamment le numéro et de la date d'expiration de la carte bancaire 5 de l'utilisateur.

Le procédé et le système selon l'invention permettent aux accepteurs (aux commerçants) qui le mettent en oeuvre de se passer du mode vente à distance classique car il est possible d'obtenir rapidement et simplement l'enregistrement préalable des utilisateurs au moyen de terminaux 8, notamment de distributeurs automatiques de billets DAB dispersés sur l'ensemble du territoire. Les utilisateurs 2 peuvent ainsi accéder facilement au système et au procédé de paiement à distance selon l'invention.

La proportion dans laquelle le procédé et le système selon l'invention réduira le taux d'impayé devrait être significative. En effet, les utilisateurs 2 sauront qu'on peut acheter et payer en toute confiance chez les accepteurs 23 (les commerçants) mettant en oeuvre le procédé. Ils sauront non seulement que leur numéro de carte ne risque pas d'être compromis à cette occasion mais ils sauront également qu'aucun fraudeur ne pourra acheter et payer selon le procédé de l'invention chez ces accepteurs 23 (commerçants) en utilisant un numéro de carte qui n'est pas le leur.

**NOMENCLATURE**

| **Groupe nominal** | **Réf. Num.** |
|---|---|
| objet portable | 1 |
| utilisateur | 2 |
| requête | 3 |
| entité | 4 |
| carte bancaire | 5 |
| lieu | 6 |
| organisme | 7 |
| terminal | 8 |
| serveur | 9 |
| base de données | 10 |
| données d'authentification | 11 |
| clavier | 12 |
| identifiant personnel | 13 |
| mot de passe | 15 |
| écran | 16 |
| ticket | 17 |
| message | 18 |
| champ de saisie | 19 |
| données | 20 |
| données d'identification | 20 |
| Adresse/numéro d'appel | 22 |
| accepteur | 23 |
| terminal mobile | 25 |
| moyens d'accouplement | 26 |
| moyens de connexion | 27 |
| réseau de communication | 28 |
| interface utilisateur-terminal | 29 |
| moyens de vérification terminal | 30 |
| moyens de transmission terminal | 31 |
| moyens de communication terminal | 32 |
| moyens de traitement informatique serveur | 33 |
| moyens d'enregistrement | 34 |
| moyens d'établissement de requête (3) et de transmission de requête (3) | 35 |
| téléphone mobile | 36 |
| moyens de réception serveur | 37 |
| moyens de transmission serveur | 38 |
| moyens de vérification serveur | 39 |
| message d'autorisation | 40 |
| moyens de lecture terminal | 43 |
| moyens de transmission accepteur | 44 |
| moyens de recherche | 47 |
| moyens de commande | 48 |
| moyens de transmission terminal mobile | 49 |
| moyens de transmission de mot de passe | 50 |

## Revendications

1. Procédé permettant de valider, en mettant en oeuvre un objet portable (1) d'un utilisateur (2), qu'une requête (3) auprès d'une entité (4) émane de cet utilisateur (2) ;
le procédé comprenant les étapes suivantes :
***Phase d'enregistrement***
lors d'une phase d'enregistrement de l'utilisateur (2) auprès d'un organisme (7) :
- l'étape, pour l'utilisateur (2), d'accoupler l'objet portable (1) à un terminal (8) ; le terminal (8) étant connecté de manière directe ou indirecte à un serveur (9) associé à une base de données (10) de l'organisme (7) ;
le procédé comprenant en outre, lors de la phase d'enregistrement :
- l'étape, pour l'utilisateur (2), sur requête du terminal (8), d'entrer dans le terminal (8) des données d'authentification (11) de cet utilisateur (2), associées à l'objet portable (1),
- l'étape, pour le terminal (8), de vérifier que les données d'authentification (11) de l'utilisateur (2) correspondent à l'objet portable (1) ;
de sorte que la phase d'enregistrement permet d'authentifier l'objet portable (1) et de vérifier que l'utilisateur (2) est bien le titulaire de l'objet portable (1) ;
le procédé comprenant en outre, lors de la phase d'enregistrement :
- l'étape, pour l'utilisateur (2), sur requête du terminal (8), de composer, au moyen d'un clavier (12) du terminal (8), un identifiant personnel (13), l'identifiant personnel (13) étant transmis par le terminal (8) au serveur (9) ;
le procédé comprenant en outre :
- l'étape, pour le terminal (8), de transmettre un mot de passe (15) à l'utilisateur (2), ce mot de passe (15) ayant été déterminé par le serveur (9) et transmis au terminal (8) ;
de sorte que le mot de passe (15) attribué par le serveur (9) ne peut être transmis qu'à l'utilisateur (2) titulaire de l'objet portable (1) authentifié ;
le procédé comprenant en outre, lors de la phase d'enregistrement :
- l'étape, pour le serveur (9), de mémoriser et d'associer, dans la base de données (10) de l'organisme (7) :
• l'identifiant personnel (13),
• le mot de passe (15) ;
***Phase d'émission d'une requête (*3*)***
le procédé comprenant en outre, lors d'une phase d'émission d'une requête (3):
- l'étape pour l'utilisateur (2) de transmettre à l'entité (4) :
• la requête (3),
• l'identifiant personnel (13);
***Phase d'autorisation de réponse à la requête (*3*)***
le procédé comprenant en outre, lors d'une phase d'autorisation de réponse à la requête (3) :
- l'étape, pour l'entité (4), de transmettre à l'organisme (7) l'identifiant personnel (13),
- l'étape, pour l'organisme (7) d'adresser à l'utilisateur (2) un message (18), ce message (18) comprenant une requête de saisie du mot de passe (15),
- l'étape, pour l'utilisateur (2), de transmettre en retour le mot de passe (15) à l'organisme (7),
- l'étape, pour l'organisme (7), de vérifier dans la base de données (10) que le mot de passe (15), transmis par l'utilisateur (2), correspond au mot de passe (15) associé à l'identifiant personnel (13) transmis par l'entité (4),
- l'étape, pour l'organisme (7), d'autoriser l'entité (4) à répondre à la requête (3) de l'utilisateur (2).

2. Procédé selon la revendication 1 ; ce procédé étant tel qu'il comprend, en outre, lors de la phase d'enregistrement, l'étape, pour le terminal (8), de lire dans l'objet portable (1) et de transmettre au serveur (9) des données (20).

3. Procédé selon la revendication 2 ; ce procédé étant tel qu'il comprend en outre l'étape pour le serveur (9) de mémoriser dans la base de données (10) de l'organisme (7) les données (20), et d'associer ces données (20) à l'identifiant personnel (13) et au mot de passe (15).

4. Procédé selon l'une quelconque des revendications 1 à 3 ; ce procédé étant tel que l'identifiant personnel (13) est une adresse de l'utilisateur (2) à laquelle l'organisme (7) peut transmettre la requête de saisie du mot de passe (15).

5. Procédé selon la revendication 4 ; le procédé comprenant en outre l'étape, pour l'organisme (7), de vérifier que l'utilisateur (2) peut être contacté à l'adresse définie par l'identifiant personnel (13), lors d'une requête relative à l'identifiant personnel (13).
**Cas du paiement de biens ou de services**

6. Procédé selon la revendication 4 ou 5 destiné à permettre à l'utilisateur (2) disposant, outre de l'objet portable (1), d'un terminal mobile (25) ayant une fonction de téléphonie, d'effectuer un paiement à distance auprès de l'entité (4) formant accepteur (23) ;
le procédé comprenant :
lors de la phase d'enregistrement de l'utilisateur (2) auprès de l'organisme (7) :
- l'étape, pour le terminal (8), de lire dans l'objet portable (1) et de transmettre au serveur (9) des données d'identification (20),
- l'étape, pour l'utilisateur (2), sur requête du terminal (8), de composer, au moyen du clavier (12) du terminal (8), un numéro d'appel (22) associé au terminal mobile (25), ce numéro constituant l'identifiant personnel (13); le numéro d'appel (22) étant transmis, par le terminal (8), au serveur (9) ;
- l'étape, pour le serveur (9), de mémoriser et d'associer, dans la base de données (10) de l'organisme (7) :
• les données d'identification (20),
• le numéro d'appel (22),
• le mot de passe (15) ;
le procédé comprenant en outre lors d'une phase de paiement, cette phase de paiement regroupant les phases d'émission de requête et d'autorisation de réponse à requête :
- l'étape, pour l'utilisateur (2), de transmettre à l'accepteur (23) le numéro d'appel (22),
- l'étape, pour l'accepteur (23), de transmettre à l'organisme (7) le numéro d'appel (22) ainsi que des informations relatives au paiement, dont le montant du paiement,
- l'étape, pour l'organisme (7) d'adresser à l'utilisateur (2) le message (18), en utilisant le numéro d'appel (22) ; le message (18) comprenant :
• les informations relatives au paiement,
• la requête dé saisie du mot de passe (15),
- l'étape, pour l'utilisateur (2), de transmettre en retour le mot de passe (15) à l'organisme (7),
- l'étape, pour l'organisme (7), de vérifier dans la base de données (10) que le mot de passe (15), transmis par l'utilisateur (2), correspond au mot de passe (15) associé au numéro d'appel (22) transmis par l'accepteur (23),
- l'étape, pour l'organisme (7) :
• de rechercher, dans la base de données (10), tout ou partie des données d'identification (20), correspondant au numéro d'appel (22) et au mot de passe (15),
• de faire débiter ou débiter un compte bancaire associé à l'objet portable (1) du montant du paiement et de faire créditer ou créditer l'accepteur (23) dudit montant ;
• de confirmer à l'accepteur (23) le paiement à distance de l'utilisateur (2) ;
de sorte que le paiement est acquitté à distance par l'utilisateur (2) sans qu'il ait eu à communiquer à l'accepteur (23) les données d'identification (20) de l'objet portable (1).
**Système**

7. Système permettant de valider, en mettant en oeuvre un objet portable (1) d'un utilisateur (2), qu'une requête (3) auprès d'une entité (4) émane de l'utilisateur (2) ;
le système comprenant, pour permettre l'enregistrement de l'utilisateur (2) auprès d'un organisme (7) :
- un terminal (8), comportant des moyens d'accouplement (26) permettant à l'utilisateur (2), d'accoupler l'objet portable (1) au terminal (8),
- un serveur (9) associé à une base de données (10) de l'organisme (7),
le serveur (9) comprenant des moyens de connexion (27) pour connecter, de manière directe ou indirecte, le terminal (8) au serveur (9) via un réseau de communication (28);
le terminal (8) comprenant en outre :
- une interface utilisateur-terminal (29) permettant à l'utilisateur (2) d'entrer dans le terminal (8), sur requête du terminal (8), des données d'authentification (11) de l'utilisateur (2), associées à l'objet portable (1),
- des moyens de vérification terminal (30) pour vérifier que les données d'authentification (11) de l'utilisateur (2) correspondent à l'objet portable (1) ;
de sorte que les moyens destinés à permettre l'enregistrement permettent d'authentifier l'objet portable (1) et de vérifier que l'utilisateur (2) est bien le titulaire de l'objet portable (1) ;
le terminal (8) étant tel que l'interface utilisateur-terminal (29) comporte un clavier (12) permettant à l'utilisateur (2) de composer, sur requête du terminal (8), un identifiant personnel (13) ;
le terminal (8) comportant :
- des moyens de transmission terminal (31) pour transmettre l'identifiant personnel (13) au serveur (9) ;
- des moyens de communication terminal (32) pour communiquer un mot de passe (15) à l'utilisateur (2) ; le mot de passe (15) ayant été déterminé par le serveur (9) en mettant en oeuvre des moyens de traitement informatique serveur (33) ; le mot de passe (15) ayant été transmis par le serveur (9) au terminal (8), via le réseau de communication (28) ;
de sorte que le mot de passe (15) attribué par le serveur (9) ne peut être transmis qu'à l'utilisateur (2) titulaire de l'objet portable (1) authentifié ;
les moyens de traitement informatique serveur (33) comportant des moyens d'enregistrement (34) pour mémoriser et associer dans la base de données (10) de l'organisme (7) :
- l'identifiant personnel (13),
- le mot de passe (15) ;
le système comprenant en outre des moyens (35) d'établissement de requête (3) et de transmission de requête (3) permettant à l'utilisateur (2) d'émettre une requête (3) et de transmettre à l'entité (4) la requête (3) ainsi que l'identifiant personnel (13) ;
le serveur (9) de l'organisme (7) comprenant en outre :
- des moyens de réception serveur (37) pour recevoir, de l'entité (4), l'identifiant personnel (13),
- des moyens de transmission serveur (38) pour adresser à l'utilisateur (2) un message (18) ; ce message (18) comprenant une requête de saisie du mot de passe (15) ;
l'utilisateur disposant de moyens de transmission de mot de passe (50), permettant, à cet utilisateur (2), de transmettre en retour le mot de passe (15) au serveur (9) de l'organisme (7), après que le mot de passe (15) ait été saisi par l'utilisateur (2) ;
les moyens de traitement informatique serveur (33) comportant des moyens de vérification serveur (39) pour vérifier dans la base de données (10) que le mot de passe (15), transmis par l'utilisateur (2), correspond au mot de passe (15) associé à l'identifiant personnel (13) transmis par l'entité (4) ;
le serveur (9) produisant en cas de vérification aboutie un message d'autorisation (40), destiné à être transmis à l'entité (4), l'autorisant à répondre à la requête (3) de l'utilisateur (2).

8. Système selon la revendication 7 ; le système étant tel que le terminal (8) comprend :
- des moyens de lecture terminal (43) permettant de lire dans l'objet portable (1) des données (20) ;
les moyens de lecture terminal (43) et les moyens de transmission terminal (31) permettant de transmettre les données (20) au serveur (9).

9. Système selon la revendication 8; le système étant tel que les moyens d'enregistrement (34) du serveur (9) permettent de mémoriser dans la base de données (10) et d'associer les données (20) à l'identifiant personnel (13) et au mot de passe (15).

10. Système selon l'une quelconque des revendications 7 à 9 ; le système étant tel que l'identifiant personnel (13) est une adresse de l'utilisateur (2) à laquelle l'organisme (7) peut transmettre la requête de saisie du mot de passe (15) ;
de sorte que, selon toute vraisemblance, le message (18) ne peut être reçu que par l'utilisateur (2).

11. Système selon la revendication 10 ; le système étant tel que les moyens de traitement informatique serveur (33) et les moyens de transmission serveur (38) du serveur (9) permettent de vérifier que l'utilisateur (2) peut être contacté à l'adresse définie par l'identifiant personnel (13).

12. Système selon la revendication 10 ou 11 destiné à permettre à l'utilisateur (2), disposant, outre de l'objet portable (1), d'un terminal mobile (25) ayant une fonction de téléphonie, d'effectuer un paiement à distance auprès de l'entité (4) formant accepteur (23) ;
le système comprenant, pour permettre l'enregistrement de l'utilisateur (2) auprès de l'organisme (7) :
dans le terminal (8):
- des moyens de lecture terminal (43) permettant de lire dans l'objet portable (1) des données d'identification (20),
- des moyens de transmission terminal (31) permettant de transmettre les données d'identification (20) au serveur (9) ;
le terminal (8) étant tel que l'interface utilisateur-terminal (29) comporte le clavier (12) permettant à l'utilisateur (2) de composer, sur requête du terminal (8), un numéro d'appel (22) associé au terminal mobile (25), ce numéro constituant l'identifiant personnel (13);
le terminal (8) comportant les moyens de transmission terminal (31) pour transmettre au serveur (9) le numéro d'appel (22) ;
les moyens d'enregistrement (34) permettant de mémoriser et d'associer dans la base de données (10) :
- les données d'identification (20),
- le numéro d'appel (22),
- le mot de passe (15) ;
le système comprenant, pour permettre le paiement par l'utilisateur (2), des moyens de transmission accepteur (44) permettant à cet utilisateur (2) de transmettre à l'accepteur (23) le numéro d'appel (22) ;
le serveur (9) de l'organisme (7) comprenant, en outre :
- les moyens de réception serveur (37) pour recevoir de l'accepteur (23) le numéro d'appel (22) ainsi que des informations relatives au paiement, dont le montant de ce paiement,
- les moyens de transmission serveur (38) pour adresser à l'utilisateur (2) le message (18), en utilisant le numéro d'appel (22) ;
le message (18) comprenant les informations relatives au paiement et la requête de saisie du mot de passe (15) ;
le terminal mobile (25) comprenant des moyens de transmission terminal mobile (49) permettant, à l'utilisateur (2), de transmettre en retour le mot de passe (15) au serveur (9) de l'organisme (7), après que le mot de passe (15) ait été saisi par l'utilisateur (2) ;
les moyens de vérification serveur (39) permettant de vérifier dans la base de données (10) que le mot de passe (15), transmis par l'utilisateur (2), correspond au mot de passe (15) associé au numéro d'appel (22) transmis par l'accepteur (23) ;
les moyens de traitement informatique serveur (33) comportant :
- des moyens de recherche (47) pour rechercher, dans la base de données (10), tout ou partie des données d'identification (20), correspondant au numéro d'appel (22) et au mot de passe (15),
- des moyens de commande (48) pour débiter ou pour faire débiter un compte bancaire associé à l'objet portable (1) du montant du paiement et pour créditer ou pour faire créditer l'accepteur (23) du montant ;
les moyens de traitement informatique serveur (33) permettant de confirmer à l'accepteur (23) le paiement à distance de l'utilisateur (2) ;
de sorte que le paiement est acquitté à distance par l'utilisateur (2) sans qu'il ait eu à communiquer à l'accepteur (23) les données d'identification (20) de l'objet portable (1).

## Claims

1. A method allowing the validation, through the employment of a user's (2) mobile device (1), that a request to an entity (4), is originated from this user (2):
The method comprising the following steps:
***Registration phase***
during a registration phase of the user (2) with an organisation (7):
- the step, for the user (2), to plug the mobile device (1) into a terminal (8); the terminal (8) being connected either directly or indirectly to a server (9) which is associated to a database (10) belonging to the organisation (7);
the method also including, during the registration phase:
- the step, for the user (2), on request from the terminal (8), of entering into the terminal (8) the authentication data (11) for this user (2) that is associated with the mobile device (1),
- the step, for the terminal (8), of verifying that the authentication data (11) entered by the user (2) corresponds to the user's mobile device (1);
whereby the registration phase enables the authentication of the mobile device (1) and the verification that the user (2) is indeed the registered holder of the mobile device (1);
the method also including, during the registration phase:
- the step, for the user (2), on request from the terminal (8), to enter, using the terminal's (8) keyboard (12), a personal ID (13), this personal ID (13) being sent by the terminal (8) to the server (9); the method further comprising:
- the step, for the terminal (8), of sending a password (15) to the user (2), this password (15) having been specified by the server (9) and sent to the terminal (8);
whereby the password (15) allocated by the server (9) can only be sent to the user (2) registered holder of the mobile device (1);
the method further comprising, during the registration phase:
- the step, for the server (9), of memorising and associating in the organisation's (7) database (10):
· the personal ID (13)
· the password (15)
***Request sending phase (3)***
the method further comprising during the request (3) sending phase:
- the step, for the user (2) of sending to the entity (4):
· the request (3)
· the personal ID (13)
***Authorisation for reply to the request (3) phase***
the method further comprising, during an authorisation for reply to the request (3) phase:
- the step, for the entity (4), of sending to the organisation (7) the personal ID (13)
- the step, for the organisation (7) of sending a message (18) to the user (2) this message comprising a request to enter the password (15),
- the step, for the user (2), of sending by reply the requested password (15) to the organisation (7)
- the step, for the organisation (7), of validating within the database (10) that the password (15) sent by the user (2), corresponds to the password (15) associated to the personal ID (13) sent by the entity (4),
- the step, for the organisation (7), of authorising the entity (4) to reply to the request (3) of the user (2).

2. The method in accordance with claim 1; this method being such that it further comprises, during the registration phase, the step, for the terminal (8), of capturing data from the mobile device (1) and of sending the data (20) to the server (9).

3. The method in accordance with claim 2; this method being such that it further comprises the step for the server (9) of recording in the organisation's (7) database (10) the data (20), and of associating this data (20) to the personal ID (13) and to the password (15).

4. The method in accordance with any of the claims 1 to 3; the method being such that the personal ID (13) is one of the user's (2) address to which the organisation (7) can send a request for the password (15) to be entered.

5. The method in accordance with claim 4; the method further comprising the step, for the organisation (7), of verifying that the user (2) can be contacted at the address specified by the personal ID (13), where there is a request relative to the personal ID (13).
**In the case of payment for goods or services**

6. The method in accordance with claims 4 or 5 designed to enable the user (2) having, as well as the mobile device (1), a mobile terminal (25) with a telephony function, to make a remote payment to the entity (4) constituting the acceptor (23);
the method comprising:
during the registration phase of the user (2) with an organisation (7):
- the step, for the terminal (8), of reading from the mobile device (1) and of sending to the server (9), identification data (20)
- the step, for the user (2), on request from the terminal (8), to enter, using the terminal's (8) keyboard (12), a calling number (22) associated with the mobile terminal (25), this number constituting the personal ID (13); the calling number (22) being sent by the terminal (8) to the server (9);
- the step, for the server (9), of memorising and associating in the organisation's (7) database (10):
the identification data (20),
the calling number (22),
the password (15);
the method further comprising, during a payment phase, this payment phase gathering the phases of sending a request and of authorisation for reply to the request:
- the step, for the user (2), of sending the calling number (22) to the acceptor (23),
- the step, for the acceptor (23), of sending to the organisation (7) the calling number (22) together with the information relating to payment, including the payment amount,
- the step, for the organisation (7) of sending the message (18) to the user (2), using the calling number (22); the message (18) including:
information relating to the payment,
the request to enter the password (15),
- the step, for the user (2) of sending in return the password (15) to the organisation (7),
- the step, for the organisation (7), of verifying within the database (10) that the password (15), sent by the user (2), corresponds to the password (15) associated with the calling number (22) sent by the acceptor (23),
- the step, for the organisation (7):
of searching, within the database (10), for all or part of the identification data (20) that corresponds to the calling number (22) and the password (15),
to order the debiting of or to debit a bank account associated to the mobile device (1) for the payment amount and to order the crediting or to credit the acceptor (23) of said amount;
of providing the acceptor (23) with confirmation that the remote payment has been made by the user (2);
whereby the remote payment is made by the user (2) without necessitating the disclosure to the acceptor (23) of the identification data (20) of the mobile device (1).
**System**

7. A system allowing the validation, through the employment of a user's (2) mobile device (1), that a request (3) to an entity (4) is originated from this user (2);
the system including, to allow the registration of the user (2) with an organisation (7):
- a terminal (8), having coupling means (26) that allow the user (2) to connect the mobile device (1) to the terminal (8),
- a server (9) associated with a database (10) belonging to the organisation (7),
the server (9) having connecting means (27), to connect in either a direct or indirect manner, to the server's (9) terminal (8) via a communications network (28); the terminal (8) further comprising:
- a user-terminal interface (29) enabling the user (2) to enter into the terminal (8), on request of the terminal (8), authentication data (11) for the user (2) that is associated with the mobile device (1),
- terminal verification means (30) to verify that the user's (2) authentication data (11) corresponds to the mobile device (1);
whereby the means allowing registration allow for the authentication of the mobile device (1) and verification that the user (2) is indeed the registered holder of the mobile device (1);
the terminal (8) being such that the user-terminal interface (29) includes a keyboard (12) enabling the user (2) to enter, on the request of the terminal (8), a personal ID (13);
the terminal (8) including:
- means of terminal transmission (31) for sending the personal ID (13) to the server (9);
- means of terminal communication (32) for sending a password (15) to the user (2); the password (15) having been specified by the server (9) using a method of server computer processing (33); the password (15) having been sent by the server (9) to the terminal (8), via the communications network (28);
whereby the password (15) allocated by the server (9) can only be sent to the user (2) who is the authenticated registered holder of the mobile device (1);
means of server computer processing (33) including recording means (33) to record on and associate with the database (10) belonging to the organisation (7):
- personal ID (13);
- the password (15);
the system further comprising means (35) for establishing requests (3) and sending requests (3) enabling the user (2) to make a request (3) and to send this request (3) together with the personal ID (13) to the entity (4);
the organisation's server (9) further comprising:
- means of server reception (37) for receiving, from the entity (4), the personal ID (13),
- means of server transmission (38) for sending to the user (2) a message (18); this message (18) comprising a request to enter the password (15);
the user (2) having password transmission means (50), enabling the user (2) to, send by reply the password (15) to the organisation's (7) server (9), after the password (15) has been entered by the user (2);
means of server computer processing (33) including server verification means (39) for verifying, within the database (10) that the password (15), sent by the user (2), corresponds to the password (15) associated with the personal ID (13) sent by the entity (4);
the server (9)generating, in case of a successful verification, an authorisation message (40) destined for transmission to the entity (4), authorising it to reply to the user's (2) request (3).

8. The system in accordance with claim 7; the system being such that the terminal (8) including:
- means of terminal data capturing (43) enabling the capture of data (20) stored on the mobile device (1);
means of terminal data capturing (43) and of terminal transmission (31) enabling the transmitting of this data (20) to the server (9).

9. The system in accordance with claim 8; the system being such that the method of recording (34) on the server (9) enable the storage on the database (10) and the association of data (20) to the personal ID (13) and to the password (15).

10. The system in accordance with any of the claims 7 to 9; the system being such that the personal ID (13) is a user's (2) address to which the organisation (7) can send the request for the password (15) to be entered.
whereby, under usual circumstances, the message (18) can only be received by the user (2).

11. The system in accordance with claim 10; the system being such that the means of server computer processing (33) and the means of server transmission (38) of the server (9) allow for verification that the user (2) can be contacted at the address specified by the personal ID (13).

12. The system in accordance with claim 10 or 11, designed to allow the user (2) having, as well as the mobile device (1), a mobile terminal (25) with a telephony function, to make a remote payment to the entity (4) constituting the acceptor (23);
the system including, to allow the registration of the user (2) with an organisation (7):
within the terminal (8):
- terminal reading means (43) enabling the capture of identification data (20) stored on the mobile device (1),
- terminal transmission means (31) enabling the transmission of identification data (20) to the server (9);
the terminal (8) being such that the user-terminal interface (29) including a keyboard (12) enabling the user (2) to enter, on request of the terminal (8), a calling number (22) associated to the mobile terminal (25), this number being the personal ID (13);
the terminal (8) having means of terminal transmission (31) for sending the calling number (22) to the server (9);
means of recording (34), enabling the entry onto and association within the database (10) of:
- the identification data (20),
- the calling number (22),
- the password (15);
the system including, to allow the payment by the user (2), means of acceptor transmission (44) enabling the user (2) to send to the acceptor (23) the calling number (22);
the organisation's (7) server (9) further comprising:
- means of server reception (37) for receiving, from the acceptor (23), the calling number (22) as well as the information relating to the payment, including this payment amount,
- means of server transmission (38) for sending the message (18), to the user (2), using the calling number (22);
the message (18) comprising information relating to payment and to the request to enter the password (15);
the mobile terminal (25) including means of mobile terminal transmission (49) permitting the user (2) to send by reply the password (15) to the organisation's server (9), after the password (15) has been entered by the user (2)
means of server verification (39), permitting verification within the database (10) that the password (15), sent by the user (2), corresponds to the password (15) associated with the calling number (22) sent by the acceptor (23);
means of server computer processing (33) including:
- searching means (47) for searching within the database (10), for all or part of the identification data (20) corresponding to the calling number (22) and to the password (15),
- command means (48) for debiting or ordering debit of a bank account associated to the mobile device (1) for the payment amount and to credit or to order the credit of the acceptor (23) of this amount;
means of server computer processing (33) allowing the confirmation to the acceptor (23) of the remote payment by the user (2);
whereby the payment is remotely effected by the user (2) without the need for the user (2) to transmit to the acceptor (23) the identification data (20) of the mobile device (1).

## Patentansprüche

1. Verfahren zum Bestätigen, durch Verwendung eines tragbaren Gegenstandes (1) eines Benutzers (2), dass eine Anfrage (3) bei einer Instanz (4) eben von diesem Benutzer (2) ausgeht;
das Verfahren enthält dabei die folgenden Schritte:
***Registrierungsphase***
bei der Registrierungsphase des Benutzers (2) innerhalb einer Organisation (7):
- den Schritt für den Benutzer (2), den tragbaren Gegenstand (1) mit einem Terminal (8) zu verbinden; wobei der Terminal (8) direkt oder indirekt mit einem Server (9) verbunden ist, der wiederum an eine Datenbank (10) der Organisation (7) angeschlossen ist;
das Verfahren beinhaltet darüber hinaus bei der Registrierungsphase:
- den Schritt für den Benutzer (2), auf Anfrage des Terminals (8), Authentisierungsdaten (11) dieses Benutzers (2) in den Terminal (8) einzugeben, die dem tragbaren Gegenstand (1) zugeordnet werden,
- den Schritt für den Terminal (8), zu überprüfen, ob die Authentisierungsdaten (11) des Benutzers (2) dem tragbaren Gegenstand (1) entsprechen;
sodass während der Registrierungsphase die Authentisierung des tragbaren Gegenstandes (1) möglich ist, sowie die Überprüfung, ob der Benutzer (2) auch tatsächlich der Inhaber des tragbaren Gegenstandes (1) ist;
das Verfahren beinhaltet darüber hinaus bei der Registrierungsphase:
- den Schritt für den Benutzer (2), auf Anfrage des Terminals (8), mithilfe einer Tastatur (12) des Terminals (8) eine Benutzeridentifizierung (13) einzugeben, wobei die Benutzeridentifizierung (13) vom Terminal (8) auf den Server (9) übertragen wird;
das Verfahren enthält darüber hinaus:
- den Schritt für den Terminal (8), dem Benutzer (2) dieses Passwort (15) zu übermitteln, das vom Server (9) bestimmt, und dem Terminal (8) übermittelt worden ist;
sodass das vom Server (9) zugeteilte Passwort (15) nur jenem Benutzer (2) übertragen werden kann, der Inhaber des authentisierten tragbaren Gegenstandes (1) ist;
das Verfahren beinhaltet darüber hinaus bei der Registrierungsphase:
- den Schritt für den Server (9) der Abspeicherung und der Zuordnung in der Datenbank (10) der Organisation (7):
• der Benutzeridentifizierung (13),
• des Passworts (15);
***Sendephase einer Anfrage (3)***
Das Verfahren enthält darüber hinaus bei der Sendephase einer Anfrage (3):
- den Schritt für den Benutzer (2), der Instanz (4) folgendes zu übermitteln:
• die Anfrage (3),
• die persönliche Identifizierung (13);
***Autorisierungsphase zum Eingehen auf die Anfrage (3)***
das Verfahren beinhaltet dabei darüber hinaus in der Autorisierungsphase für eine Antwort auf die Anfrage (3):
- den Schritt für die Instanz (4), der Organisation (7) die Benutzeridentifizierung (13) zu übermitteln,
- den Schritt für die Organisation (7), dem Benutzer (2) eine Nachricht (18) zu senden, wobei diese Nachricht (18) eine Anfrage zum Eintragen des Passwortes (15) enthält,
- den Schritt für den Benutzer (2), der Organisation (7) im Gegenzug das Passwort (15) zu übermitteln,
- den Schritt für die Organisation (7), in der Datenbank (10) nachzusehen, ob das vom Benutzer (2) übermittelte Passwort (15) jenem Passwort (15) entspricht, das der Benutzeridentifizierung (13) zugeordnet wird, die von der Instanz (4) übermittelt wurde,
- den Schritt für die Organisation (7), der Instanz (4) die Freigabe zu erteilen, auf die Anfrage (3) des Benutzers (2) einzugehen.

2. Verfahren nach Anspruch 1; dieses Verfahren ist dabei so gestaltet, dass es darüber hinaus bei der Registrierungsphase den Schritt für den Terminal (8) enthält, im tragbaren Gegenstand (1) Daten (20) auszulesen, und diese dem Server (9) zu übermitteln.

3. Verfahren nach Anspruch 2; dieses Verfahren ist dabei so gestaltet, dass es darüber hinaus den Schritt für den Server (9) enthält, die Daten (20) in der Datenbank (10) der Organisation (7) abzuspeichern, und diese Daten (20) der Benutzeridentifizierung (13) und dem Passwort (15) zuzuordnen.

4. Verfahren nach irgendeinem der Ansprüche 1 bis 3; dieses Verfahren ist dabei so gestaltet, dass die Benutzeridentifizierung (13) eine Adresse des Benutzers (2) ist, an die die Organisation (7) die Anfrage zur Eingabe des Passwortes (15) senden kann.

5. Verfahren nach Anspruch 4; das Verfahren enthält dabei darüber hinaus den Schritt für die Organisation (7), zu überprüfen, ob der Benutzer (2) bei einer Anfrage hinsichtlich der Benutzeridentifizierung (13) an der durch die Benutzeridentifizierung (13) definierten Adresse kontaktiert werden kann. **Fall einer Bezahlung von Gütern oder Dienstleistungen**

6. Verfahren nach Anspruch 4 oder 5, das dazu bestimmt ist, dem Benutzer (2), der über den tragbaren Gegenstand (1) hinaus über ein mobiles Terminal (25) mit Telefonfunktion verfügt, zu ermöglichen, einen Zahlungsvorgang auf Distanz bei der Instanz (4) zu tätigen, die als Akzeptant (23) fungiert;
das Verfahren enthält dabei:
bei der Registrierungsphase des Benutzers (2) gegenüber der Organisation (7):
- den Schritt für den Terminal (8), die Identifizierungsdaten (20) aus dem tragbaren Gegenstand (1) auszulesen, und diese dem Server (9) zu übermitteln,
- den Schritt für den Benutzer (2), auf Anfrage des Terminals (8), und mithilfe der Tastatur (12) des Terminals (8) eine Rufnummer (22) zu wählen, die dem mobilen Terminal (25) zugeordnet ist, wobei diese Rufnummer die Benutzeridentifizierung (13) bildet; die Rufnummer (22) wird dabei vom Terminal (8) dem Server (9) übermittelt;
- den Schritt für den Server (9), folgende Daten in der Datenbank (10) der Organisation (7) zu speichern und zuzuordnen:
• die Identifizierungsdaten (20),
• die Rufnummer (22),
• das Passwort (15);
das Verfahren enthält dabei darüber hinaus bei einer Bezahlungsphase, wobei diese Bezahlungsphase die Sendephase der Anfrage und die Autorisierungsphase zum Eingehen auf diese Anfrage enthält:
- den Schritt für den Benutzer (2), dem Akzeptanten (23) die Rufnummer (22) zu übertragen,
- den Schritt für den Akzeptanten (23), der Organisation (7) die Rufnummer (22) und die Informationen im Zusammenhang mit dem Zahlungsvorgang, darunter die zu bezahlende Summe, zu übermitteln,
- den Schritt für die Organisation (7), dem Benutzer (2) die Nachricht (18) unter Verwendung der Rufnummer (22) zuzusenden; die Nachricht (18) enthält dabei:
• die Informationen im Zusammenhang mit dem Zahlungsvorgang,
• die Anfrage zur Eingabe des Passwortes (15);
- den Schritt für den Benutzer (2), im Gegenzug der Organisation (7) das Passwort (15) zu übermitteln,
- den Schritt für die Organisation (7), in der Datenbank (10) nachzuprüfen, ob das Passwort (15), das durch den Benutzer (2) übermittelt wurde, auch jenem Passwort (15) entspricht, das der Rufnummer (22) zugeordnet wird, die vom Akzeptanten (23) übermittelt wurde,
- den Schritt für die Organisation (7):
• in der Datenbank (10) nach allen oder einem Teil der Identifizierungsdaten (20) zu suchen, die der Rufnummer (22) und dem Passwort (15) entsprechen,
• von einem Bankkonto, das dem tragbaren Gegenstand (1) zugeordnet ist, die Zahlungssumme abzubuchen oder abbuchen zu lassen, und die besagte Summe dem Akzeptanten (23) gutzuschreiben oder gutschreiben zu lassen;
• dem Akzeptanten (23) den Zahlungsvorgang auf Distanz des Benutzers (2) zu bestätigen;
sodass der Zahlungsvorgang auf Distanz vom Benutzer (2) quittiert wird, ohne dass er dem Akzeptanten (23) die Identifizierungsdaten (20) des tragbaren Gegenstandes (1) zu übermitteln hätte.
**System**

7. System zum Bestätigen, durch Verwendung eines tragbaren Gegenstandes (1) eines Benutzers (2), dass eine Anfrage (3) bei einer Instanz (4) eben von diesem Benutzer (2) ausgeht;
das System enthält dabei zum Registrieren des Benutzers (2) bei der Organisation (7) folgendes:
- einen Terminal (8) mit Kopplungssystemen (26), anhand derer der Benutzer (2) den tragbaren Gegenstand (1) mit dem Terminal (8) verbinden kann,
- einen Server (9), der mit einer Datenbank (10) der Organisation (7) verbunden ist,
der Server (9) verfügt dabei über Verbindungssysteme (27) zum direkten oder indirekten Verbinden des Terminals (8) mit dem Server (9) über ein Kommunikationsnetzwerk (28);
der Terminal (8) enthält darüber hinaus:
- eine Benutzer-Terminal Schnittstelle (29), die es dem Benutzer (2) ermöglicht, auf Anfrage des Terminals (8) Identifizierungsdaten (11) des Benutzers (2) in den Terminal (8) einzugeben, die dem tragbaren Gegenstand (1) zugeordnet sind,
- Terminal Kontrollsysteme (30), um zu prüfen, ob die Authentisierungsdaten (11) des Benutzers (2) auch dem tragbaren Gegenstand (1) entsprechen;
sodass die Systeme, die zur Freigabe der Registrierung bestimmt sind, die Authentisierung des tragbaren Gegenstandes (1) ermöglichen, sowie die Überprüfung, ob der Benutzer (2) auch der Inhaber des tragbaren Gegenstandes (1) ist;
der Terminal (8) ist dabei so gestaltet, dass die Benutzer-Terminal Schnittstelle (29) eine Tastatur (12) enthält, die es dem Benutzer (2) ermöglicht, auf Anfrage des Terminals (8) eine Benutzeridentifizierung (13) einzugeben;
der Terminal (8) enthält dabei:
- Terminal Übertragungssysteme (31) zum Übermitteln der Benutzeridentifizierung (13) an den Server (9);
- Terminal Kommunikationssysteme (32) zur Kommunikation eines Passwortes (15) an den Benutzer (2); das Passwort (15) wurde dabei durch den Server (9) unter Verwendung von Server Datenverarbeitungssystemen (33) bestimmt; das Passwort (15) wurde dabei durch den Server (9) über das Kommunikationsnetzwerk (28) dem Terminal (8) übermittelt;
sodass das durch den Server (9) zugeordnete Passwort (15) nur jenem Benutzer (2) übermittelt werden kann, der Inhaber des authentisierten tragbaren Gegenstandes (1) ist;
die Datenverarbeitungssysteme (33) enthalten dabei Speichersysteme (34) zum Speichern und Zuordnen folgender Parameter in der Datenbank (10) der Organisation (7):
- die Benutzeridentifizierung (13),
- das Passwort (15)
das System enthält darüber hinaus Systeme (35) zum Erstellen von Anfragen (3) und zum Übertragen von Anfragen (3), die es dem Benutzer (2) ermöglichen, eine Anfrage (3) auszusenden, und der Instanz (4) die Anfrage (3), sowie die persönliche Identifizierung (13) zu übermitteln; der Server (9) der Organisation (7) enthält darüber hinaus:
- Server Empfangssysteme (37) zum Empfangen der Benutzeridentifizierung (13) von der Instanz (4),
- Server Übertragungssysteme (38) zum Übermitteln einer Nachricht (18) an den Benutzer (2); diese Nachricht (18) enthält dabei eine Anfrage zur Eingabe eines Passwortes (15);
der Benutzer verfügt dabei über Übertragungssysteme für das Passwort (50) anhand derer dieser Benutzer (2) im Gegenzug dem Server (9) der Organisation (7) das Passwort übermitteln kann, nachdem eben dieser Benutzer (2) das Passwort (15) eingegeben hat;
die Server Datenverarbeitungssysteme (33) enthalten dabei Server Kontrollsysteme (39) zur Überprüfung in der Datenbank (10), ob das Passwort (15), das vom Benutzer (2) übermittelt wurde, jenem Passwort (15) entspricht, das der Benutzeridentifizierung (13) zugeordnet ist, die von der Instanz (4) übermittelt wurde;
der Server (9) erstellt dabei für den Fall einer abgeschlossenen Überprüfung eine Freigabemeldung (40), die dazu bestimmt ist, der Instanz (4) übermittelt zu werden, wodurch sie die Freigabe erhält, auf die Anfrage (3) des Benutzers (2) einzugehen.

8. System nach Anspruch 7; das System ist dabei so ausgelegt, dass der Terminal (8) folgendes enthält:
- Terminal Lesesysteme (43) zum Auslesen der Daten (20) aus dem tragbaren Gegenstand (1);
die Terminal Lesesysteme (43) und die Terminal Übermittlungssysteme (31) ermöglichen so die Übertragung der Daten (20) an den Server(9).

9. System nach Anspruch 8; das System ist dabei so ausgelegt, dass die Speichersysteme (34) des Servers (9) die Speicherung der Daten (20) in der Datenbank (10) und ihre Zuordnung zur Benutzeridentifizierung (13) und zum Passwort (15) ermöglichen.

10. System nach irgendeinem der Ansprüche 7 bis 9; dieses System ist dabei so ausgelegt, dass die Benutzeridentifizierung (13) eine Adresse des Benutzers (2) ist, an die die Organisation (7) die Anfrage zur Eingabe des Passwortes (15) senden kann.
sodass die Nachricht (18) mit größtmöglicher Wahrscheinlichkeit nur vom Benutzer (2) empfangen werden kann.

11. System nach Anspruch 10; das System ist dabei so ausgelegt, dass die Server Datenverarbeitungssysteme (33) und die Server Übermittlungssysteme (38) des Servers (9) eine Überprüfung ermöglichen, ob der Benutzer (2) an der durch die Benutzeridentifizierung (13) definierten Adresse kontaktiert werden kann.

12. System nach Anspruch 10 oder 11, das dazu bestimmt ist, dem Benutzer (2), der über den tragbaren Gegenstand (1) hinaus über ein mobiles Terminal (25) mit Telefonfunktion verfügt, zu ermöglichen, einen Zahlungsvorgang auf Distanz bei der Instanz (4) zu tätigen, die als Akzeptant (23) fungiert;
das System enthält dabei zur Speicherung des Benutzers (2) bei der Organisation (7):
im Terminal (8):
- Terminal Lesesysteme (43) zum Auslesen der Identifizierungsdaten (20) aus dem tragbaren Gegenstand (1),
- Terminal Übertragungssysteme (31) zum Übertragen der Identifizierungsdaten (20) zum Server (9);
der Terminal (8) ist dabei so gestaltet, dass die Benutzer-Terminal Schnittstelle (29) eine Tastatur (12) enthält, die es dem Benutzer (2) ermöglicht, eine Rufnummer (22) zu wählen, die dem mobilen Terminal (25) zugeordnet ist, wobei diese Nummer die Benutzeridentifizierung (13) bildet
der Terminal (8) enthält Terminal Übertragungssysteme (31) zum Übertragen der Rufnummer (22) auf den Server (9)
die Speichersysteme (34) ermöglichen es, folgende Daten in der Datenbank (10) zu speichern und zuzuordnen:
- die Identifizierungsdaten (20),
- die Rufnummer (22),
- das Passwort (15);
um dem Benutzer (2) Zahlungsvorgänge zu ermöglichen, enthält das System Akzeptanten Übertragungssysteme (44), die es dem Benutzer (2) ermöglichen, dem Akzeptanten (23) die Rufnummer (22) zu übermitteln;
der Server (9) der Organisation (7) enthält darüber hinaus:
- Server Empfangssysteme (37) zum Empfang der Rufnummer (22) vom Akzeptanten (23), sowie von Informationen im Zusammenhang mit dem Zahlungsvorgang, wie beispielsweise die Zahlungssumme,
- Server Übertragungssysteme (38) zur Übermittlung der Nachricht (18) an den Benutzer (2), unter Verwendung der Rufnummer (22);
die Nachricht (18) enthält dabei die Informationen im Zusammenhang mit dem Zahlungsvorgang und die Anfrage zur Eingabe des Passwortes (15);
der mobile Terminal (25) enthält dabei Übertragungssysteme (49) des mobilen Terminals, anhand derer der Benutzer (2) im Gegenzug dem Server (9) der Organisation (7) das Passwort (15) übermitteln kann, nach Eingabe des Passwortes (15) durch eben diesen Benutzer (2);
die Server Kontrollsysteme (39) ermöglichen die Überprüfung in der Datenbank (10), ob das Passwort (15), das vom Benutzer (2) übermittelt wurde, jenem Passwort (15) entspricht, das der Rufnummer (22) zugeordnet ist, die vom Akzeptanten (23) übermittelt wurde;
die Server Datenverarbeitungssysteme (33) enthalten dabei:
- Suchsysteme (47) zum Suchen in der Datenbank (10) nach allen oder einem Teil der Identifizierungsdaten (20), die der Rufnummer (22) und dem Passwort (15) entsprechen,
- Steuersysteme (48) zum Abbuchen oder Abbuchen lassen der Zahlungssumme von einem Bankkonto, das dem tragbaren Gegenstand (1) zugeordnet ist, und zum Gutschreiben oder Gutschreiben lassen der besagten Summe zugunsten des Akzeptanten (23);
Server Datenverarbeitungssysteme (33), um dem Akzeptanten (23) den Zahlungsvorgang auf Distanz durch den Benutzer (2) zu bestätigen;
sodass der Zahlungsvorgang auf Distanz vom Benutzer (2) quittiert wird, ohne dass er dem Akzeptanten (23) die Identifizierungsdaten (20) des tragbaren Gegenstandes (1) zu übermitteln hätte.
